# EUROPEAN PATENT SPECIFICATION

(11) **EP 3 403 855 B1**
(45) Date of publication and mention of the grant of the patent: **02.02.2022**
(21) Application number: 16885111.1
(22) Date of filing: 20.12.2016
(51) Int. Cl.: B60C 19/08, B60C 9/00, D02G 3/48, B60C 11/00, B60C 15/06, B60C 9/04, B60C 19/00

(54) **PNEUMATIC TIRE**
LUFTREIFEN
PNEUMATIQUE

(30) Priority: 13.01.2016 JP 2016004821
(43) Date of publication of application: 21.11.2018
(73) Proprietor: Bridgestone Corporation, Tokyo 104-8340 (JP)
(72) Inventor: HOSHINO, Yuta, Tokyo 104-8340 (JP)
(74) Representative: Oxley, Robin John George
(86) International application number: PCT/JP2016/088000
(87) International publication number: WO 2017/122509

(56) References cited:
- EP-A1- 2 567 833
- EP-A1- 2 933 122
- DE-A1-102010 037 004
- JP-A- 2013 193 577
- JP-A- 2014 125 005
- JP-A- 2014 133 467
- JP-A- 2015 120 446
- JP-A- 2015 120 446
- JP-A- 2015 171 848

## Description

### TECHNICAL FIELD

The present invention relates to a pneumatic tire, and more particularly, to a pneumatic tire (hereinafter, also simply referred to a "tire") in which the conductivity is improved.

### BACKGROUND ART

In recent years, with increasing demand for fuel-efficiency of tires, rubber members of tires have been becoming low-loss. However, when a larger amount of silica is added in place of carbon black or when the amount of carbon black is reduced by increasing the particle size of the carbon black in order to make rubber for tires low-loss, the electric resistance value of the rubber increases. Accordingly, when the whole rubber composition to be used for a tire is made low-loss, the electric resistance of the tire increases, which leads to radio noise, generation of static electricity before opening/closing a door of a vehicle, or the like, and therefore, a technique for reducing the electric resistance of a tire is demanded.

To address the above problems, conventionally, a variety of attempts for reducing the electric resistance of a tire by arranging conductive fibers have been made. For example, Patent Document 1 discloses an electrically conductive tire in which carcass cords of a carcass ply nearest to a breaker among carcass plies and breaker cords are each formed by an assembly composed of at least one metal filament and a large number of organic fibers, as an electrically conductive tire which can ground static electricity generated on a vehicle body smoothly on a road surface.

### PATENT DOCUMENT

Patent Document 1: JPH3-169711A (claims, etc.). Attention is also drawn to the disclosures of JP2015 120446, EP2,567,833, EP2,933,122 and DE10 2010 037004.

### SUMMARY OF THE INVENTION

### PROBLEMS TO BE SOLVED BY THE INVENTION

As described above, conventionally, a large number of attempts for reducing the electric resistance of a tire have been made unsatisfactorily. For example, as in the above-described Patent Document 1, when a metal fiber is used for a carcass cord, there arise problems such as decrease in durability and considerable deterioration in productivity due to application of an inelastic fiber. Establishment of a technique capable of reducing the electric resistance of a tire without greatly changing a variety of performances or manufacturing processes required for the tire has thus been demanded.

Accordingly, an object of the present invention is to solve the above-described problems and to provide a pneumatic tire in which the electric resistance is reduced without adversely affecting other performances or manufacturing processes.

### MEANS FOR SOLVING THE PROBLEMS

The present inventor intensively studied to find that the conductivity of a tire can be improved by arranging a composite fiber containing a conductive fiber and a non-conductive fiber inside the tire. The present inventor also found that it is important to expose the composite fiber on both surfaces of a carcass ply in order to secure a conductive path inside the tire, thereby completing the present invention. Herein, the composite fiber refers to a fiber composed of a plurality of different kinds of fibers.

That is, the present invention is a pneumatic tire as claimed in claim 1.

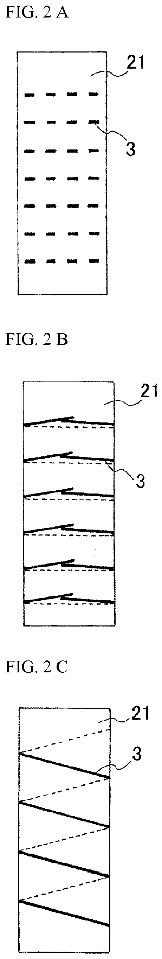

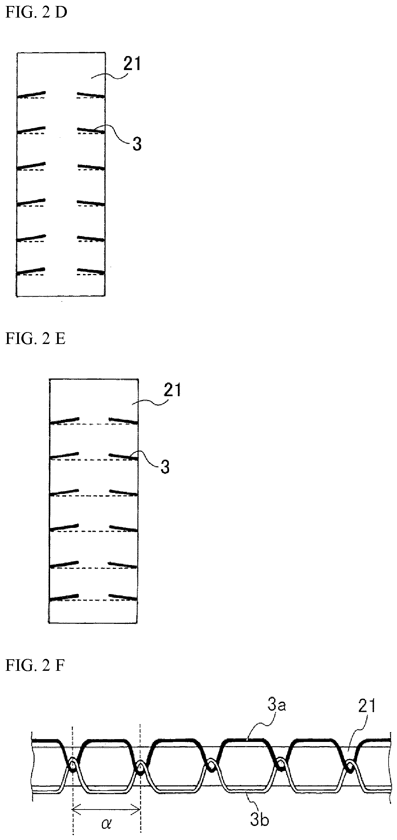

In the present invention, preferably, the non-conductive fiber is made of an organic material and the composite fiber contains not less than 50% by mass of the non-conductive fiber. In the present invention, preferably, the composite fiber is sewn to the carcass. In this case, suitably, the sewing pitch of the composite fiber is from 2 to 40 mm. Herein, the sewing pitch refers to a distance corresponding to one stitch when a composite fiber is sewn to a carcass, and corresponds to α in the following FIG. 2F. The sewing pitch may be uniform or not uniform as long as it is within the above range, and is desirably uniform. Unless otherwise specifically noted, the sewing pitch herein refers to the average value of individual pitches. Further, in the present invention, preferably, the composite fiber is wound around the carcass. The composite fiber can be wound only around the ends of the carcass in the tire width direction, or can be wound around the whole carcass in the tire width direction. In this case, the composite fiber can be spirally wound around the carcass. Specifically, preferably, the composite fiber is wound around the carcass from a portion in contact with one end of the cushion rubber or the belt under cushion in the tire width direction by way of the bead portion through the tire inner side of the carcass to the other end of the cushion rubber or the belt under cushion in the tire width direction. Also preferably, a rubber chafer is provided on the outer surface of the bead portion in the tire width direction; the carcass is composed of a main body portion extending between the pair of bead portions and turn-up portions each turned up and curled up around a bead core embedded in each of the pair of bead portions from the inside to the outside; and the composite fiber is wound around the carcass from a portion of one of the turn-up portions on the outer side in the tire width direction which is in contact with the rubber chafer by way of the inner side of the turn-up portion in the tire width direction and the outer side of the main body portion in the tire width direction through the tire outer side of the carcass to a portion of the other of the turn-up portions on the outer side in the tire width direction which is in contact with the rubber chafer. Suitably, the winding pitch of the composite fiber is 1 to 12 /m. The winding pitch herein refers to the number of composite fibers wound per unit length along the tire circumferential direction of a carcass ply. Measurement of the winding pitch is performed at the end of a ply when the composite fiber is wound only around the ends of the carcass in the tire width direction, and is performed on the surface of the ply on the tire equator line CL when the composite fiber is wound around the whole carcass in the tire width direction. A starting point of the measurement is on the composite fiber. Still further, in the present invention, preferably, the composite fiber is arranged in the tire circumferential direction at an end count of not less than 0.04 /5 cm. The end count herein refers to the number of the composite fibers present per unit length in the tire circumferential direction. Measurement of the end count is performed at the end of a ply when the composite fiber is wound only around the ends of the carcass in the tire width direction, and is performed on the surface of the ply on the tire equator line CL when the composite fiber is wound around the whole carcass in the tire width direction. A starting point of the measurement is on the composite fiber. In cases in which the composite fiber is sewn to the ply as illustrated in FIG. 2A described below, the composite fiber is to be measured when the composite fiber is present on the measurement line, regardless of whether the composite fiber appear on the surface of the ply or not.

Still further, in the tire according to the present invention, it is possible that a bleeder cord is extended at least from the pair of bead portions to portions in contact with the cushion rubber or the belt under cushion, and the composite fiber is arranged in place of 3 to 100% by mass of the bleeder cord.

Still further, in the present invention, preferably, the composite fiber is composed of spun yarns, and suitably, the fineness of the composite fiber is from 20 to 1,000 dtex. Still further, preferably, the composite fiber is arranged at an angle of 30 to 150° with respect to the tire circumferential direction, and more preferably, the composite fiber is arranged at an angle of 50 to 130°with respect to the tire circumferential direction. Still more preferably, the composite fiber is arranged at an angle of 80 to 100° with respect to the tire circumferential direction.

Still further, in the present invention, preferably, the conductive fiber contains at least one of a metal-containing fiber, a carbon-containing fiber, and a metal oxide-containing fiber, and also preferably, the non-conductive fiber contains at least one of cotton, nylon, polyester, and polypropylene. Still further, in the present invention, suitably, the breaking elongation Eb of the composite fiber is not less than 5%. Preferably, the resistance value of the composite fiber is not larger than 1.0 × 10⁷ Ω/ cm, and more preferably, the resistance value of the composite fiber is not larger than 1.0 × 10³ Ω/ cm. Still further, in the present invention, preferably, a conductive rubber portion is provided from a tread grounding portion to the outer surface of the cushion rubber in the tire radial direction.

### EFFECTS OF THE INVENTION

According to the present invention, it becomes possible to realize a pneumatic tire whose electric resistance is reduced without adversely affecting other performances or manufacturing processes.

### BRIEF DESCRIPTION OF THE DRAWINGS

FIG. 1 is a half cross-sectional view in the width direction illustrating one example of a pneumatic tire according to the present invention.
FIGS. 2A-2F are drawings each for explaining a specific example of a state in which a composite fiber is arranged on a pre-molded carcass treatment, in which FIGS 2A and 2F show embodiments of the invention, while FIGS 2B to 2E do not fall within the scope of the invention, but are useful for understanding the invention.
FIG. 3 is a half cross-sectional view in the width direction illustrating another example of a pneumatic tire, which is not according to the present invention, but which is useful for understanding the present invention.
FIG. 4 is a half cross-sectional view in the width direction illustrating still another example of a pneumatic tire, which is not according to the present invention, but which is useful for understanding the present invention.
FIG. 5 is a drawing for explaining a method of measuring the electric resistance value of tires in Examples.
FIG. 6 is a half cross-sectional view in the width direction illustrating still another example of a pneumatic tire according to the present invention.
FIG. 7 is an explanatory view illustrating a variation of the positional relationship of ends of a cushion rubber and a belt under cushion in the tire width direction.
FIG. 8 is an explanatory view illustrating another variation of the positional relationship of ends of a cushion rubber and a belt under cushion in the tire width direction.
FIG. 9 is an explanatory view illustrating still another variation of the positional relationship of ends of a cushion rubber and a belt under cushion in the tire width direction.

### MODE FOR CARRYING OUT THE INVENTION

Hereinafter, embodiments according to the present invention will be described in detail with reference to the Drawings.

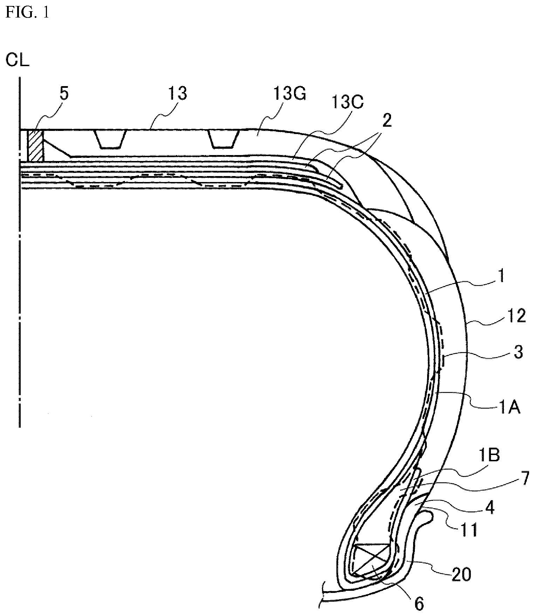

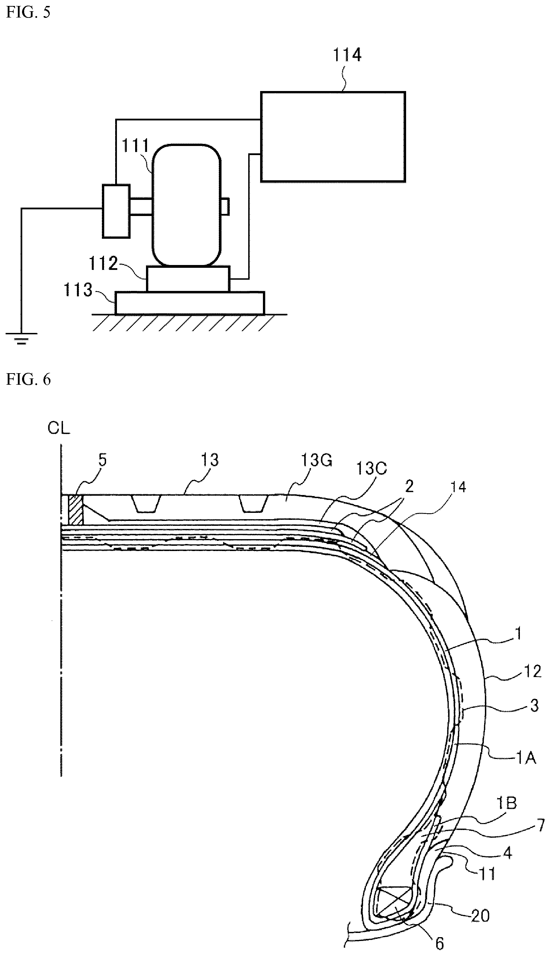

FIGS. 1 and 6 are a half cross-sectional view in the width direction illustrating one example of a pneumatic tire according to the present invention. The illustrated pneumatic tire comprises a pair of bead portions 11, a pair of side wall portions 12 continuing from a pair of bead portions 11 to a pair of bead portions 11, and a tread portion 13 extending between a pair of side wall portions 12 extending between a pair of side wall portions 12 to form a grounding portion. The illustrated tire comprises a carcass 1 as a skeleton composed of at least one, for example one to three, in the illustrated example, one carcass ply extending toroidally between the pair of bead portions 11, and at least one, for example two to four, in the illustrated example, two belt layers 2. Further, the tire is provided with a cushion rubber 13C, and a tread rubber 13G forming a tread portion in turn on the outer side of the belt layer 2 in the tire radial direction. Still further, a rubber chafer 4 can be arranged on the outer surface of the bead portion 11 in the tire width direction. FIG. 1 and FIG. 6 illustrate the same embodiment except that a belt under cushion 14 is arranged at the outer ends of the belt layer 2 in the tire width direction.

In the present invention, it is important that a composite fiber 3 containing a conductive fiber and a non-conductive fiber is extended at least from the pair of bead portions 11 to portions in contact with the cushion rubber 13C or a belt under cushion 14 arranged at the outer ends of the belt layer in the tire width direction. The composite fiber 3 is arranged so as to be exposed to both surfaces of the carcass 1 at the outer and inner sides of the tire. By arranging the composite fiber 3 in the above-described manner, a conductive path inside the tire can be secured, and the electric resistance of the tire can be reduced. That is, in the present invention, since the composite fiber 3 containing a conductive fiber is arranged so as to be exposed to both surfaces of the carcass 1 at the outer and inner sides of the tire, a portion where the composite fiber is exposed to the tire outer side surface can secure an electrical connection with a tire grounding portion, and at the same time, a portion where the composite fiber is exposed to the tire inner side surface can secure an electrical connection with a rim 20 via the rubber chafer 4 made of a conductive rubber at a turn-up portion 1B, whereby a conductive path inside the tire can be secured.

In the present invention, since the composite fiber 3 contains a conductive fiber and a non-conductive fiber, elongation of the composite fiber can be secured to some extent different from a conventional metal fiber or a carbon fiber, and therefore, the composite fiber does not break when a stress is loaded during a tire manufacturing process or when a strain is applied to the tire during traveling of a vehicle. Further, in the present invention, since the composite fiber 3 is not one which is arranged in place of a skeleton member such as a carcass ply, a problem such as deterioration in durability of a tire is not caused. Therefore, according to the present invention, since the electric resistance can be reduced without adversely affecting other performances or manufacturing processes, a pneumatic tire without problems due to increase in electric resistance can be realized even when a reduction in fuel consumption is attempted by making a tire rubber member low-loss.

The composite fiber 3 according to the present invention may contain a conductive fiber and a non-conductive fiber. Specific examples of the conductive fiber include a metal-containing fiber, a carbon-containing fiber, and, a metal oxide-containing fiber. At least one of these fibers can be used. Herein, a metal-containing fiber refers to a fiber whose content of metal is from 5 to 100% by mass, and examples of metal and metal oxide include stainless steel, steel, aluminum, copper, and oxidation thereof. Examples of a non-conductive fiber include an organic material such as cotton, nylon, polyester such as polyethylene terephthalate, and polypropylene. At least one of these can be used. A composite fiber composed of such a conductive fiber and non-conductive fiber has a favorable elongation and excellent adhesion, which is preferable.

The ratio of a conductive fiber to a non-conductive in the composite fiber 3 used in the present invention is not particularly limited. Suitably, 50% by mass, for example, 80 to 98% by mass of a non-conductive fiber is contained in the composite fiber. When the composite fiber 3 contains a non-conductive fiber at the above-described ratio, elongation of the composite fiber can be favorably secured, which is preferable.

Specific examples of the composite fiber 3 in the present invention include Bekinox (Bekinox, registered trademark) manufactured by Bekaert Corporation and Clacarbo (registered trademark) KC-500R and KC-793R manufactured by kuraray trading Co., Ltd.

From the viewpoint of attaining air bleeding property, conductivity, and durability at the same time, the fineness of the composite fiber 3 is preferably from 20 to 1,000 dtex, and more preferably from 150 to 600 dtex.

The breaking elongation Eb of the composite fiber 3 is preferably not less than 5% since breakage during manufacturing can be suppressed, and more preferably, the breaking elongation is not less than 6% since the composite fiber is less likely to break even when an abnormal input is applied to the composite fiber during using a tire. The breaking elongation Eb can be, for example, from 5 to 15%. Here, the breaking elongation Eb of the composite fiber 3 can be measured at 23°C in accordance with a method of measuring "elongation at break" defined in JIS K 6251:2010.

The resistance value of the composite fiber 3 is suitably not less than 1.0 × 10⁷ Ω/ cm, more suitably not less than 1.0 × 10³ Ω/ cm, and further suitably from 10 to 1.0 × 10³ Ω/ cm. From the viewpoint of surely securing conductive path, the resistance value of the composite fiber 3 is preferably in the above-described range.

In the present invention, the composite fiber 3 needs to be extended at least from the bead portion 11 to a portion in contact with the cushion rubber 13C or belt under cushion 14, and preferably, as illustrated, the composite fiber 3 is extended from the bead portion 11 to the tread portion 13. Since a conductive rubber is usually used for the cushion rubber 13C and belt under cushion 14, a conductive path can be secured by arranging the composite fiber 3 at least from the bead portion 11 to a portion in contact with the cushion rubber 13C or belt under cushion 14. Since a conductive path from the cushion rubber 13C to a tread grounding portion is secured by a conductive rubber portion 5 which is usually provided near the tire equator line CL, from the viewpoint of reducing the length of the conductive path, the composite fiber 3 is preferably extended from the bead portion 11 to the tread portion 13. Here, in the present invention, the cushion rubber 13C is a rubber member located between a tread rubber 13G and a coating rubber of the belt layer 2 (when a cap layer is provided, a coating rubber of the cap layer) at least on the tire equator line CL, and is a rubber member which is usually extended to near a tire shoulder portion and is not exposed to the tire outer surface since the rubber member is covered by the tread rubber 13G and, depending on a state of arrangement of rubbers, a sidewall rubber.

The belt under cushion 14 is a conductive rubber member provided at the outer ends of the belt layer 2 in the tire width direction, and, as illustrated, is in contact with the cushion rubber 13C and positioned on the inner side thereof in the tire radial direction. More specifically, the belt under cushion 14 is a conductive rubber member which is arranged, in the vicinity of the outer end in the tire width direction of the belt member including a plurality of layers of belt layers and a covering rubber of a belt cord, on the inner side of the tire radial direction of at least one belt layer, in particular, all the belt layers, and is arranged on the outer side of the carcass 1 in the tire radial direction. The cushioning property of a portion where the belt under cushion 14 is arranged can be improved.

In the present invention, the arrangement positions of ends of the cushion rubber 13C and the belt under cushion 14 in the tire width direction can be appropriately determined in relation to other members. For example, in FIG. 6, a belt under cushion 14 is arranged on the inner side of the belt layers 2 in the tire radial direction, and a cushion rubber 13C is arranged on the outer side of the belt layers 2 in the tire radial direction, in such a manner that they cover the outer ends of the belt layers 2 in the tire width direction.

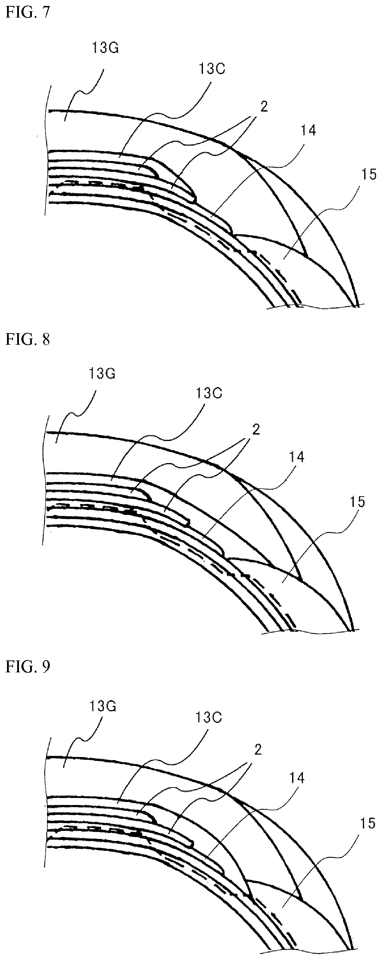

FIGS. 7 to 9 are explanatory views illustrating variations of the positional relationship of ends of a cushion rubber 13C and a belt under cushion 14 in the tire width direction. Symbol 15 in the drawings indicates a side rubber. In FIG. 7, the belt under cushion 14 is arranged on the inner side of the belt layer 2 in the tire radial direction located on the innermost side in the tire radial direction, extending in the tire width direction to the outside of the outer ends of the belt layer 2 in the tire width direction; and the cushion rubber 13 C is arranged outside the belt layer 2 in the tire radial direction. FIG. 8 is similar to FIG. 7 in that the belt under cushion 14 is arranged on the inner side of the belt layer 2 in the tire radial direction located on the innermost side in the tire radial direction, extending in the tire width direction to the outside of the outer ends of the belt layer 2 in the tire width direction, but is different therefrom in that the cushion rubber 13 C is arranged outside the belt layer 2 and the belt under cushion 14 in the tire radial direction to a position in contact with a side rubber 15. Further, FIG. 9 is similar to FIGS. 7 and 8 in that the belt under cushion 14 is arranged on the inner side of the belt layer 2 in the tire radial direction located on the innermost side in the tire radial direction, extending in the tire width direction to the outside of the outer ends of the belt layer 2 in the tire width direction, but is different therefrom in that the cushion rubber 13C is arranged outside the belt layer 2 and the belt under cushion 14 in the tire radial direction and the ends of the cushion rubber 13C in the tire width direction is arranged so as to get into the side rubber 15 inward in the tire width direction.

In the Embodiments illustrated in FIGS. 6 to 8, by arranging the composite fiber 3 from the bead portion 11 to a portion in contact with the belt under cushion 14, an electrical connection can be secured with the shortest installation length. On the other hand, in the Embodiment illustrated in FIG. 9, the cushion rubber 13C extends more outside in the tire width direction than the belt under cushion 14, and the ends of the cushion rubber 13C in the tire width direction is arranged so as to get into the side rubber 15 inward in the tire width direction, and therefore, by arranging the composite fiber 3 from the bead portion 11 to a portion in contact with the cushion rubber 13C under the side rubber 15, an electrical connection can be secured with the shortest installation length.

Here, as illustrated, the conductive rubber portion 5 can be provided from the tread grounding portion to the outer surface of the cushion rubber 13C in the tire radial direction all around the tire in the tire circumferential direction. That is, the conductive rubber portion 5 is provided so as to penetrate the tread rubber 13G from the tread grounding portion.

In the present invention, the composite fiber 3 needs to be arranged so as to be exposed to both surfaces of the carcass 1 at the outer and inner sides of the tire. FIGS. 2A-2E are drawings each for explaining a specific example of a state in which a composite fiber 3 is arranged on a pre-molded carcass treatment 21. A longitudinal direction (up or down direction in the drawings) of the carcass treatment 21 corresponds to the tire circumferential direction. Specifically, as illustrated in FIG. 1 and FIG. 2A, which is according to the present invention, the composite fiber 3 can be sewn to the carcass 1 in the form of so-called running stitch. The sewing form is not particularly restricted as long as the composite fiber is exposed to both surfaces of the carcass 1. That is, in this case, the composite fiber 3 is arranged along its extending direction on both surfaces, the outer and inner sides of the carcass 1, penetrating the carcass 1. By this, the composite fiber 3 is surely exposed on the rubber chafer 4 side of a turn-up portion 1B of the carcass regardless of the size of a tire or a member, thereby surely securing a conductive path.

In this case, a sewing pitch of the composite fiber 3 can be usually from 2 to 40 mm, and particularly from 5 to 25 mm along the extending direction of the composite fiber 3. From the viewpoint of more surely securing a conductive path, this rage is preferable.

As illustrated in FIG. 2B, which is not according to the present invention, the composite fiber 3 can be wound around the carcass 1. That is, in this case, the composite fiber 3 is wound around the pre-molded carcass treatment 21 at least by one round along its width direction or in the same direction as that of a carcass ply cord to be arranged on its outer circumference. Also by this, the composite fiber 3 is surely exposed on the rubber chafer 4 side of the turn-up portion 1B of the carcass regardless of the size of a tire or a member, thereby surely securing a conductive path.

Further, as illustrated in FIG. 2C, which is not according to the present invention, the composite fiber 3 can be spirally wound around the carcass 1. In this case, the composite fiber 3 is wound around the pre-molded carcass treatment 21 inclined with respect to its width direction or in a direction inclined with respect to a carcass ply cord to be arranged on its outer circumference. This has an advantage that the manufacturing efficiency is better than the form of FIG. 2B since the composite fiber can be spirally wound continuously. Also by this, the composite fiber 3 is surely exposed on the rubber chafer 4 side of the turn-up portion 1B of the carcass regardless of the size of a tire or a member, thereby surely securing a conductive path.

As illustrated in FIG. 2D, which is not according to the present invention, the composite fiber 3 may be wound on both ends of the pre-molded carcass treatment 21 in the width direction along its width direction or in the same direction as that of a carcass ply cord so as to be positioned in the range of from the bead portion 11 to a portion in contact with a cushion rubber 13C or belt under cushion 14, to be arranged on its outer circumference. That is, in this case, the composite fiber 3 is not arranged near the tire equator line CL. Also by this, the composite fiber 3 is surely exposed on the rubber chafer 4 side of the turn-up portion 1B of the carcass regardless of the size of a tire or a member, thereby surely securing a conductive path.

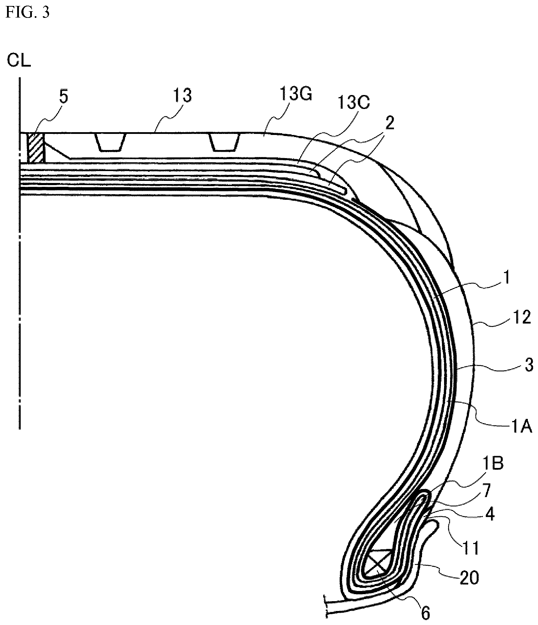

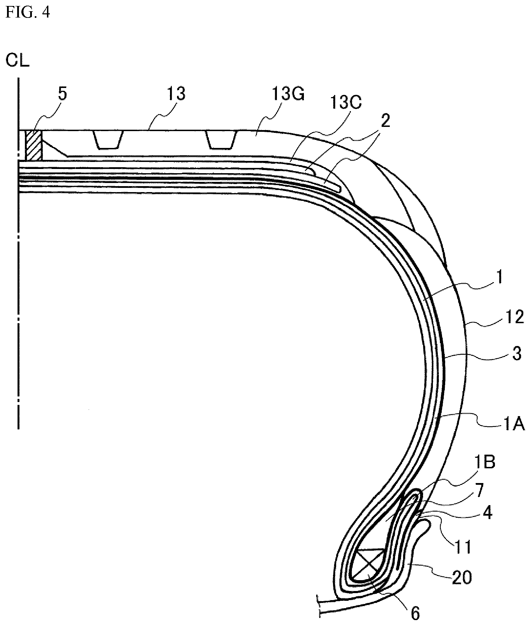

Still further, as a modified example of FIG. 2B, as illustrated in FIG. 2E, which is not according to the present invention, the composite fiber 3 may be wound around the carcass. FIG. 3 and FIG. 4 are half cross-sectional views in the width direction of other examples of a tire which is not according to the present invention, corresponding to FIG. 2E. In this case, the composite fiber 3 is partially wound on the pre-molded carcass treatment 21 along its width direction or in the same direction as that of a carcass ply cord. In an example illustrated in FIG. 3, which is not according to the present invention, the composite fiber 3 is wound around the carcass 1 from a portion in contact with one end of the cushion rubber 13C or the belt under cushion in the tire width direction by way of the bead portion 11 through the tire inner side of the carcass 1 to the other end of the cushion rubber 13C or the belt under cushion in the tire width direction. In an example illustrated in FIG. 4, which is not according to the present invention, when the carcass 1 is composed of a main body portion 1A extending between the pair of bead portions 11 and turn-up portions 1B each turned up and curled up around a bead core 6 embedded in each of the pair of bead portions 11, the composite fiber 3 is wound around the carcass 1 from a position outside one of the turn-up portions 1B in the tire width direction which is in contact with the rubber chafer 4 by way of the inner side of the turn-up portion 1B in the tire width direction and the outer side of the main body portion 1A in the tire width direction through the tire outer side of the carcass 1, further, by way of the other outer side of the main body portion 1A in the tire width direction and the inner side of the other turn-up portion 1B in the tire width direction to a position outside the other of the turn-up portions 1B in the tire width direction which is in contact with the other rubber chafer 4. Also by this, the composite fiber 3 is surely exposed on the rubber chafer 4 side of the turn-up portion 1B of the carcass regardless of the size of a tire or a member, thereby surely securing a conductive path.

Still further, as a modified example of FIG. 2A, as illustrated in FIG. 2F, which is according to the present invention, the composite fiber 3 may be sewn to the carcass 1 using a sewing machine in such a manner that a needle thread 3a and a bobbin thread 3b are weaved. Also in this case, the composite fiber 3 penetrates the carcass 1 along the extending direction to be arranged on both surfaces, the outer and inner sides of the carcass 1. By this, the composite fiber 3 is surely exposed on the rubber chafer 4 side of the turn-up portion 1B of the carcass regardless of the size of a tire or a member, thereby surely securing a conductive path.

In the present invention, from the viewpoint of manufacturability, a state of arrangements illustrated in FIG. 2A is preferable among the above.

In this case, the winding pitch of the composite fiber 3 can be usually 1 to 12 /m, in particular, 2 to 5 /m along a longitudinal direction of the carcass treatment 21, i.e., a direction orthogonal to the extending direction of the carcass ply cord. From the viewpoint of surely securing a conductive path, this range is preferable.

In the present invention, the composite fiber 3 may be arranged so as to be exposed to both surfaces of the carcass 1 at the outer and inner sides of the tire. A conductive path can be secured when a portion where the composite fiber is exposed to the tire outer side and a portion where the composite fiber is exposed to the tire inner side are electrically connected with each other at least one location. Herein, that a portion where the composite fiber 3 is exposed to the tire outer side and a portion where the composite fiber is exposed to the tire inner side are electrically connected with each other does not necessarily mean that they are physically connected with each other.

Although depending on the resistance value of the composite fiber 3, from the viewpoint of surely securing a conductive path in the tire circumferential direction, the composite fiber 3 is preferably arranged at an end count of not less than 0.04 /5 cm, more preferably at an end count of not less than 0.1 /5 cm, and for example at an end count of from 0.1 to 0.2 /5 cm.

Still further, the composite fiber 3 is preferably arranged at an angle of from 30 to 150° with respect to the tire circumferential direction, more preferably at an angle of from 50 to 130°, and further preferably at an angle of from 80 to 100°. When the extending direction of the composite fiber 3 is too close to the tire circumferential direction, the length of a conductive path is large, which is not preferable. The composite fiber 3 is not always arranged linearly as illustrated in FIG. 2, and may be arranged, for example, in a zigzag shape or in a wave shape. In such cases, a direction in which the composite fiber 3 as a whole extends is defined as the extending direction of the composite fiber 3.

In the present invention, the composite fiber 3 can be arranged in place of a bleeder cord which has been conventionally arranged for bleeding air in a carcass ply during vulcanization. A bleeder cord is a cord member which is arranged on one side or both sides of a carcass or a belt layer in order to reduce air inclusion failures occurring during a tire production process, and which is generally composed of a cotton yarn, a polyester yarn, or the like. A bleeder cord can reduce air inclusion failures by absorbing or passing air included in a tire during a tire production process. Since a bleeder cord is extended at least from the bead portion 11 to a portion which is in contact with a cushion rubber 13C or belt under cushion 14, an effect due to the arrangement of the composite fiber 3 can be obtained without adding a new member by replacing a portion of the bleeder cord with the composite fiber 3. As a matter of course, an expected effect of the present invention can be obtained by leaving the bleeder cord as it is and adding the composite fiber 3 thereto.

When the composite fiber 3 is arranged in place of a conventional bleeder cord, the composite fiber 3 can be arranged in place of 3 to 100% by mass, and specifically 20 to 50% by mass of the bleeder cord. When an equivalent number of composite fibers 3 are replaced with, an expected effect according to the present invention can be surely obtained.

The composite fiber 3 which is used in the present invention may be a pun yarn or a filament yarn, and suitably is a spun yarn (blended yarn) obtained by spinning a short fiber. In order to secure the adhesive property of the composite fiber 3 with rubber, the composite fiber 3 needs to be subjected to a dipping process using an adhesive for securing adhesion between an organic fiber and rubber. However, when an adhesive surface coating is provided on the composite fiber 3 by the dipping process, air bleeding properties via the composite fiber 3 deteriorate. For this reason, when the composite fiber 3 is arranged in place of the bleeder cord, it is preferable that only a portion of the dipping process is performed, and it is more preferable that the dipping process is not performed. However, when the composite fiber 3 has no adhesive surface coating, adhesion between the composite fiber 3 and unvulcanized rubber decreases and the composite fiber 3 may be dropped during manufacturing. In this case, by using a spun yarn (blended yarn), adhesion with rubber can be secured by anchoring effect of a short fiber even without a dipping process, and air bleeding properties are also maintained, which is preferable. When a filament yarn is used, the filament yarn is preferably twisted in order to maintain air bleeding properties. In this case, the twist count is suitably not less than 10 /10 cm, and may be, for example, 30 to 60 /10 cm.

On the other hand, when a portion of the bleeder cord is replaced with the composite fiber 3, air bleeding properties can be secured by remaining bleeder cords composed, for example, of a cotton yarn, and therefore, both adhesion with rubber and air bleeding properties can be attained at the same time even when the composite fiber 3 is subjected to a dipping process. Accordingly, in the present invention, although the composite fiber 3 may be subjected to a dipping process, from the viewpoint of securing the degree of freedom of the design such as replacing all the bleeder cords with the composite fiber 3, it is preferable that the composite fiber is not subjected to a dipping process.

In the present invention, only that the above-described composite fiber 3 is arranged is important, and by this, an expected effect of the present invention can be obtained. Other portions of the tire structure can be appropriately configured in accordance with an ordinary method, and are not particularly restricted.

For example, in the present invention, since the electric resistance of a tire can be reduced by the arrangement of the composite fiber 3, a rubber composition which is made more low-loss than that of a conventional tire structure can be used as a tire case member such as a coating rubber for a carcass ply, thereby improving the low fuel consumption of the tire.

In the illustrated tire, the carcass 1 is turned up around the bead core 6 and curled up to the outer side in the tire radial direction to form the turn-up portion 1B, and a bead filler 7 with a tapered cross-section is arranged on the outer side of the bead core 6 in the tire radial direction. Further, although not illustrated, the tire according to the present invention can be provided with at least one cap layer covering whole the belt layer 6 or at least one layered layer covering only the end of the belt layer 6 on the outer side of the belt layer 6 in the tire radial direction, as needed. Still further, although not illustrated, an inner liner is usually provided on the innermost surface of the tire.

### EXAMPLES

The present invention will be described in more detail using Examples.

A pneumatic tire with a tire size of 195/65R15 comprising a carcass as a skeletal structure composed of one carcass ply extending toroidally between a pair of bead portions and two belt layers located on the outer side of the carcass in the tire radial direction of the crown portion was manufactured. A bleeder cord (material: cotton) and a fiber material listed on Tables 1 to 5 below were arranged on the tire from a bead portion to a tread portion so as to be exposed to both surfaces of the carcass at the outer and inner sides of the tire.

The bleeder cord was arranged on the outer surface of the carcass at an angle of 90° with respect to the tire circumferential direction. As illustrated in FIG. 1 and FIG. 2A, the fiber material listed on Tables 2 and 3 was arranged so as to be sewn to the carcass at an angle of 90° with respect to the tire circumferential direction and at a sewing pitch of 20 mm. As illustrated in FIG. 3 and FIG. 2E, the fiber material listed on Table 4, which is not according to the present invention, was arranged so as to be partially wound to the carcass at an angle of 90° with respect to the tire circumferential direction from a portion in contact with one end of a cushion rubber in the tire width direction by way of a bead portion through the tire inner side of the carcass to the other end of the cushion rubber in the tire width direction. As illustrated in FIG. 2C, the fiber material listed on Table 5, which is not according to the present invention, was arranged so as to be spirally wound to the carcass. A conductive rubber portion was provided from a tread grounding portion to the outer surface of the cushion rubber in the tire radial direction.

For each of the obtained test tire, the manufacturability, the air inclusion occurrence rate, and the electric resistance value were evaluated. The results thereof are listed on the Table below.

### (Manufacturability)

The manufacturability of each test tire was evaluated as "OK" when there was no breakage of a yarn during normal manufacturing, and evaluated as "NG" when there was breakage of a yarn during normal manufacturing.

### (Air Inclusion Occurrence Rate)

The air inclusion occurrence rate of each test tire was evaluated according to the following manner. The air inclusion occurrence rate can be said to be favorable when it is less than 1%.

In accordance with the above-described method, 100 tires were manufactured. The number of the products in which an air inclusion was occurred was counted, and the ratio of the counted number to 100 was calculated as the air inclusion occurrence rate.

### (Electric Resistance Value)

As illustrated in FIG. 5, the electric resistance value of the tire was measured in accordance with WdK 110 sheet 3 of GERMAN ASSOCIATION OF RUBBER INDUSTRY by using a model HP4394A High Resistance Meter manufactured by HEWLETT PACKARD. In FIG. 5, numeral 111 is a tire, numeral 112 is a steel plate, numeral 113 is an insulator, and numeral 114 is a High Resistance Meter. The electric resistance value was measured by flowing an electric current of 1,000 V between the steel plate 112 on the insulator 113 and a rim of the tire 111.

The lower the electric resistance value of the tire, the better.

**[Table 1]**

| | | Cord configuration | Non-conductive fiber /conductive fiber (Mass ratio) | Cord type | Fineness (dtex) | Twist count (/10 cm) | Breaking elongation (%) | Resistance value (Ω/cm) |
|---|---|---|---|---|---|---|---|---|
| Fiber material | A | Cotton + carbon black dipping process | 95/5 ^{∗10} | Spun yarn | 397 | 50 | 6 | 2^{∗}10^5 |
| | B | Carbon fiber ^{∗1} | - | Filament yarn | 670 | 4 | 2 | 1^{∗}10^3 |
| | c | Nylon /carbon composite fiber ^{∗2} | 80/20 | Filament yarn | 44 | 40 | 80 | 1^{∗}10^7 |
| | D | Nylon /carbon composite fiber ^{∗3} | 80/20 | Filament yarn | 120 | 40 | 75 | 3^{∗}10^6 |
| | E | Nylon /carbon composite fiber ^{∗4} | 60/40 | Filament yarn | 198/2 | 20 | 80 | 1^{∗}10^6 |
| | F | Nylon /carbon composite fiber ^{∗5} | 80/20 | Filament yarn | 198/2 | 30 | 85 | 9^{∗}10^6 |
| | G | Nylon /carbon composite fiber ^{∗6} | 80/20 | Filament yarn | 396/2 | 30 | 80 | 5^{∗}10^6 |
| | H | Polyester /metal fiber blended yarn ^{∗7} | 80/20 | Spun yarn | 197 | 50 | 10 | 1^{∗}10^2 |
| | I | Polyester /metal fiber blended yarn ^{∗8} | 80/20 | Spun yarn | 197/2 | 50 | 13 | 50 |
| | J | Cotton /metal fiber blended yarn ^{∗9} | 80/20 | Spun yarn | 197/2 | 50 | 5.5 | 40 |

| | | | | | | | | |
|---|---|---|---|---|---|---|---|---|
| ^{∗}1) Carbon fiber: manufactured by TOHO TENAX Co., Ltd., 1K ^{∗}2) Nylon /carbon composite fiber: manufactured by kuraray trading Co., Ltd., Clacarbo (registered trademark) KC-500R ^{∗}3) Nylon /carbon composite fiber: manufactured by kuraray trading Co., Ltd., Clacarbo (registered trademark) KC-500R ^{∗}4) Nylon /carbon composite fiber: manufactured by kuraray trading Co., Ltd., Clacarbo (registered trademark) KC-793R ^{∗}5) Nylon /carbon composite fiber: manufactured by kuraray trading Co., Ltd., Clacarbo (registered trademark) KC-500R ^{∗}6) Nylon /carbon composite fiber: manufactured by kuraray trading Co., Ltd., Clacarbo (registered trademark) KC-500R ^{∗}7) Polyester /metal fiber blended yarn: manufactured by Bekaert Corporation, Bekinox (registered trademark) (BK 50/1 polyester) ^{∗}8) Polyester /metal fiber blended yarn: manufactured by Bekaert Corporation, Bekinox (registered trademark) (BK 50/2 polyester) ^{∗}9) Cotton /metal fiber blended yarn: manufactured by Bekaert Corporation, Bekinox (registered trademark) (BK 50/2 cotton) ^{∗}10) Mass ratio of a cotton which is a non-conductive component to carbon black which is a conductive component | | | | | | | | |

**[Table 2]**

| | Comparative Example 1 | Comparative Example 2 | Comparative Example 3 | Comparative Example 4 |
|---|---|---|---|---|
| Bleeder cord (no dipping process) | Yes | None | Yes | Yes |
| End count of bleeder cord (/5 cm) | 1 | - | 0.75 | 0.5 |
| Fiber material type | None | A | A | B |
| Presence of dipping process of fiber material | - | Yes | Yes | None |
| End count of fiber material (/5 cm) | - | 1 | 0.25 | 0.5 |
| Ratio of fiber material to total sum of bleeder cord and fiber material (%) | 0 | 100 | 25 | 50 |
| Manufacturability | OK | OK | OK | NG |
| Air inclusion occurrence rate (%) | 0 | 3 | 1 | 1 |
| Electric resistance value (Ω) | 4.1×10⁸ | 9.2×10⁶ | 5.1×10⁷ | 6.1×10⁶ |

**[Table 3]**

| | Example 1 | Example 2 | Example 3 | Example 4 | Example 5 | Example 6 | Example 7 | Example 8 | Example 9 |
|---|---|---|---|---|---|---|---|---|---|
| Bleeder cord | Yes | Yes | Yes | Yes | Yes | None | Yes | Yes | Yes |
| End count of bleeder cord (/5 cm) | 1 | 0.5 | 0.5 | 0.9 | 0.8 | - | 0.9 | 0.96 | 0.5 |
| Fiber material type | C | D | F | G | H | I | I | J | J |
| Presence of dipping process of fiber material | None | None | None | None | None | None | None | None | None |
| End count of fiber material (/5 cm) | 1 | 0.75 | 0.5 | 0.1 | 0.2 | 1 | 0.1 | 0.04 | 0.5 |
| Ratio of fiber material to total sum of bleeder cord and fiber material (%) | 50 | 60 | 50 | 10 | 20 | 100 | 10 | 4 | 50 |
| Manufacturability | OK | OK | OK | OK | OK | OK | OK | OK | OK |
| Air inclusion occurrence rate (%) | 0 | 0 | 0 | 0 | 0 | 0 | 0 | 0 | 0 |
| Electric resistance value (Ω) | 8.1×10⁶ | 1.6×10⁷ | 5.2×10⁶ | 8.8×10⁷ | 2.3×10⁶ | 1.6×10⁶ | 4.0×10⁶ | 6.8×10⁷ | 2.5×10⁶ |

**[Table 4]**

| | Example 10 | Example 11 | Example 12 | Example 13 |
|---|---|---|---|---|
| Bleeder cord | Yes | None | Yes | Yes |
| Bleeder cord end count (/5 cm) | 0.5 | - | 0.96 | 0.8 |
| Fiber material type | H | I | I | J |
| Presence of dipping process of fiber material | None | None | None | None |
| End count of fiber material (/5 cm) | 0.5 | 1 | 0.04 | 0.2 |
| Ratio of fiber material to total sum of bleeder cord and fiber material (%) | 50 | 100 | 4 | 20 |
| Manufacturability | OK | OK | OK | OK |
| Air inclusion occurrence rate (%) | 0 | 0 | 0 | 0 |
| Electric resistance value (Ω) | 4.2×10⁶ | 1.5×10⁶ | 7.0×10⁷ | 6.0×10⁶ |

**[Table 5]**

| | Example 14 | Example 15 | Example 16 |
|---|---|---|---|
| Bleeder cord | Yes | None | Yes |
| Bleeder cord end count (/5 cm) | 0.8 | - | 0.96 |
| Fiber material type | H | I | J |
| Presence of dipping process of fiber material | None | None | None |
| Winding pitch (/m) | 5 | 12 | 2 |
| Ratio of fiber material to total sum of bleeder cord and fiber material (%) | 30 | 100 | 7 |
| Manufacturability | OK | OK | OK |
| Air inclusion occurrence rate (%) | 0 | 0 | 0 |
| Electric resistance value (Ω) | 5.6×10⁶ | 4.0×10⁶ | 5.5×10⁷ |
| Arrangement angle with respect to tire circumferential direction (°) | 72 | 82 | 50 |

As listed on the above-described Tables, it was confirmed that the electric resistance of a test tire of each Example in which a composite fiber containing a conductive fiber and a non-conductive fiber was extended from a bead portion to a portion in contact with a cushion rubber so as to be exposed to both surfaces of the carcass at the outer and inner sides of the tire was reduced without adversely affecting air bleeding properties or a manufacturing process.

### DESCRIPTION OF SYMBOLS

- 1: Carcass
- 1A: Main body portion
- 1B: Turn-up portion
- 2: Belt layer
- 3: Composite fiber
- 4: Rubber chafer
- 5: Conductive rubber portion
- 6: Bead core
- 7: Bead filler
- 11: Bead portion
- 12: Side wall portion
- 13: Tread portion
- 13G: Tread rubber
- 13C: Cushion rubber
- 14: Belt under cushion
- 15: Side rubber
- 20: Rim
- 21: Carcass treatment

## Claims

1. A pneumatic tire comprising a carcass (1) composed of at least one carcass ply extending toroidally between a pair of bead portions (11) as a skeletal structure, and at least one belt layer (2) located on the outer side of a crown portion of the carcass (1) in the tire radial direction, wherein
the tire is provided with a cushion rubber (13C) and a tread rubber (13G) both forming a tread portion (13) in turn on the outer side of the belt layer (2) in the tire radial direction,
a composite fiber (3) containing a conductive fiber and a non-conductive fiber is extended at least from the bead portion (11) to a position in contact with the cushion rubber (13C) or a belt under cushion (14) arranged at an outer end of the belt layer (2) in the tire width direction, and the composite fiber (3) is located to be exposed on both surfaces of the carcass (1) at the outer and inner sides of the tire,
the cushion rubber (13C) is a rubber member located between a tread rubber (13G) and a coating rubber of the belt layer (2) at least on the tire equator line (CL),
the belt under cushion (14) is a conductive rubber member provided at the outer ends of the belt layer (2) in the tire width direction, and, is in contact with the cushion rubber (13C) and positioned on the inner side thereof in the tire radial direction, and
the composite fiber (3) is arranged at an angle of 30 to 150° with respect to the tire circumferential direction, **characterized in that**
the composite fiber (3) is sewn to the carcass (1), and
the composite fiber (3) is arranged along its extending direction on both surfaces, the outer and inner sides of the carcass (1), penetrating the carcass (1)

2. The pneumatic tire according to claim 1, wherein the non-conductive fiber is made of an organic material and the composite fiber (3) contains not less than 50% by mass of the non-conductive fiber.

3. The pneumatic tire according to claim 1, wherein the sewing pitch of the composite fiber (3) is from 2 to 40 mm.

4. The pneumatic tire according to claim 1, wherein the composite fiber (3) is arranged in the tire circumferential direction at an end count of not less than 0.04 /5 cm.

5. The pneumatic tire according to claim 1, wherein a bleeder cord is extended at least from the bead portion (11) to a position in contact with the cushion rubber (13C) or the belt under cushion (14), and the composite fiber (3) is arranged in place of 3 to 100% by mass of the bleeder cord.

6. The pneumatic tire according to claim 1, wherein the composite fiber (3) is composed of spun yarns.

7. The pneumatic tire according to claim 1, wherein the fineness of the composite fiber (3) is from 20 to 1,000 dtex.

8. The pneumatic tire according to claim 1, wherein the composite fiber (3) is arranged at an angle of 50 to 130° with respect to the tire circumferential direction.

9. The pneumatic tire according to claim 1, wherein the conductive fiber contains at least one of a metal-containing fiber, a carbon-containing fiber, and a metal oxide-containing fiber.

10. The pneumatic tire according to claim 1, wherein the non-conductive fiber contains at least one of cotton, nylon, polyester, and polypropylene.

11. The pneumatic tire according to claim 1, wherein the breaking elongation Eb of the composite fiber (3) is not less than 5%, measured at 23°C in accordance with a method of measuring "elongation at break" defined in JIS K 6251:2010.

12. The pneumatic tire according to claim 1, wherein the resistance value of the composite fiber (3) is not larger than 1.0 × 10⁷ Ω/ cm.

13. The pneumatic tire according to claim 1, wherein a conductive rubber portion (5) is provided from a tread grounding portion to an outer surface of the cushion rubber (13C) in the tire radial direction.

## Patentansprüche

1. Luftreifen, der eine Karkasse (1) umfasst, die aus wenigstens einer Karkassenschicht, die sich kreisringförmig zwischen einem Paar von Wulstabschnitten (11) als eine Skelettstruktur erstreckt, und mindestens einer Gürtellage (2), die in der Reifenradialrichtung auf der äußeren Seite eines Scheitelabschnitts der Karkasse (1) angeordnet ist, besteht, wobei
der Reifen mit einem Polstergummi (13C) und einem Laufflächengummi (13G) versehen ist, die beide wiederum einen Laufflächenabschnitt (13) in der Reifenradialrichtung auf der äußeren Seite der Gürtellage (2) bilden,
eine Verbundfaser (3), die eine leitfähige Faser und eine nicht leitfähige Faser enthält, sich wenigstens von dem Wulstabschnitt (11) aus bis zu einer Position in Berührung mit dem Polstergummi (13C) oder einem Gürtelunterpolster (14), das in der Reifenradialrichtung an einem äußeren Ende der Gürtellage (2) angeordnet ist, erstreckt und die Verbundfaser (3) so angeordnet ist, dass sie an der äußeren und der inneren Seite des Reifens an beiden Oberflächen der Karkasse (1) freigelegt ist,
der Polstergummi (13C) ein Gummielement ist, das mindestens auf der Reifenäquatorlinie (CL) zwischen einem Laufflächengummi (13G) und einem Überzugsgummi der Gürtellage (2) angeordnet ist,
das Gürtelunterpolster (14) ein leitfähiges Gummielement ist, das in der Reifenradialrichtung an den äußeren Enden der Gürtellage (2) bereitgestellt wird, und in Berührung mit dem Polstergummi (13C) steht und in der Reifenradialrichtung auf der inneren Seite angeordnet ist, und
die Verbundfaser (3) in einem Winkel von 30 bis 150° in Bezug auf die Reifenumfangsrichtung des Polstergummis (13C) angeordnet ist, **dadurch gekennzeichnet, dass**
die Verbundfaser (3) an die Karkasse (1) geheftet ist; und
die Verbundfaser (3) entlang ihrer Ausdehnungsrichtung auf beiden Oberflächen, der äußeren und der inneren Seite der Karkasse (1), angeordnet ist, wobei sie die Karkasse (1) durchdringt.

2. Luftreifen nach Anspruch 1, wobei die nicht leitfähige Faser aus einem organischen Material hergestellt ist und die Verbundfaser (3) nicht weniger als 50 Masse-% der nicht leitfähigen Faser enthält.

3. Luftreifen nach Anspruch 1, wobei der Heftungsabstand der Verbundfaser (3) von 2 bis 40 mm beträgt.

4. Luftreifen nach Anspruch 1, wobei die Verbundfaser (3) in der Reifenumfangsrichtung bei einer Fadendichte von nicht weniger als 0,04/5 cm angeordnet ist.

5. Luftreifen nach Anspruch 1, wobei sich ein Ableitungskord mindestens von dem Wulstabschnitt (11) aus bis zu einer Position in Berührung mit dem Polstergummi (13C) oder dem Gürtelunterpolster (14) erstreckt und die Verbundfaser (3) an Stelle von 3 bis 100 Masse-% des Ableitungskords angeordnet ist.

6. Luftreifen nach Anspruch 1, wobei die Verbundfaser (3) aus gesponnenen Garnen besteht.

7. Luftreifen nach Anspruch 1, wobei die Feinheit der Verbundfaser (3) von 20 bis 1 000 dtex beträgt.

8. Luftreifen nach Anspruch 1, wobei die Verbundfaser (3) in einem Winkel von 50 bis 130° in Bezug auf die Reifenumfangsrichtung des Polstergummis (13C) angeordnet ist.

9. Luftreifen nach Anspruch 1, wobei die leitfähige Faser wenigstens eines von einer metallhaltigen Faser, einer kohlenstoffhaltigen Faser und einer metalloxidhaltigen Faser enthält.

10. Luftreifen nach Anspruch 1, wobei die nicht leitfähige Faser wenigstens eines von Baumwolle, Nylon, Polyester und Polypropylen enthält.

11. Luftreifen nach Anspruch 1, wobei die Bruchdehnung der Verbundfaser (3) nicht weniger als 5 % beträgt, gemessen bei 23 °C gemäß einem Verfahren zum Messen der "Bruchdehnung", das in JIS K 6251:2010 definiert ist.

12. Luftreifen nach Anspruch 1, wobei der Widerstandswert der Verbundfaser (3) nicht größer als 1,0 × 10⁷ Ω/cm ist.

13. Luftreifen nach Anspruch 1, wobei ein leitfähiger Gummiabschnitt (5) von einem Laufflächen-Bodenberührungsabschnitt bis zu einer in der Reifenradialrichtung äußeren Fläche des Polstergummis (13C) bereitgestellt wird.

## Revendications

1. Bandage pneumatique, comprenant une carcasse (1) comprenant au moins une nappe de carcasse s'étendant toroïdalement entre une paire de parties de talon (11), sous forme d'une structure de squelette ; et au moins une couche de ceinture (2) disposée sur le côté externe d'une partie de sommet de la carcasse (1), dans la direction radiale du bandage pneumatique, dans lequel :
le bandage pneumatique est équipé d'une gomme de coussin (13C) et d'une gomme de bande de roulement (13G), formant toutes les deux à leur tour une partie de bande de roulement (13) sur le côté externe de la couche de ceinture (2), dans la direction radiale du bandage pneumatique ;
une fibre composite (3) contenant une fibre conductrice et une fibre non conductrice, s'étend au moins de la partie de talon (11) vers une position en contact avec la gomme de coussin (13C) ou un coussin de base de la ceinture (14) agencé au niveau d'une extrémité externe de la couche de ceinture (2), dans la direction de la largeur du bandage pneumatique, et la fibre composite (3) est disposée de sorte être exposée sur les deux surfaces de la carcasse (1) au niveau des côtés externe et interne du bandage pneumatique ;
la gomme de coussin (13C) est un élément de caoutchouc disposé entre la gomme de bande de roulement (13G) et une gomme de revêtement de la couche de ceinture (2), au moins sur la ligne équatoriale du bandage pneumatique (CL) ;
le coussin de base de la ceinture (14) est un élément de caoutchouc conducteur disposé au niveau des extrémités externes de la couche de ceinture (2), dans la direction de la largeur du bandage pneumatique, et est en contact avec la gomme de coussin (13C) et positionné sur le côté interne de celle-ci, dans la direction radiale du bandage pneumatique ; et
la fibre composite (3) est agencée à un angle compris entre 30 et 150° par rapport à la direction circonférentielle du bandage pneumatique, **caractérisé en ce que** :
la fibre composite (3) est cousue sur la carcasse (1) ; et
la fibre composite (3) est agencée le long de sa direction d'extension sur les deux surfaces, les côtés externe et interne de la carcasse (1), pénétrant dans la carcasse (1).

2. Bandage pneumatique selon la revendication 1, dans lequel la fibre non conductrice est composée d'un matériau organique, et la fibre composite (3) ne contient pas moins de 50% en masse de la fibre non conductrice.

3. Bandage pneumatique selon la revendication 1, dans lequel le pas de couture de la fibre composite (3) est compris entre 2 et 40 mm.

4. Bandage pneumatique selon la revendication 1, dans lequel la fibre composite (3) est agencée dans la direction circonférentielle du bandage pneumatique avec une densité non inférieure à 0,04/5 cm.

5. Bandage pneumatique selon la revendication 1, dans lequel un câblé de purge s'étend au moins de la partie de talon (11) vers une position en contact avec la gomme de coussin (13C) ou le coussin de base de la ceinture (14), et la fibre composite (3) est agencée à la place de 3 à 100% en poids du câblé de purge.

6. Bandage pneumatique selon la revendication 1, dans lequel la fibre composite (3) est composée de fils filés.

7. Bandage pneumatique selon la revendication 1, dans lequel la finesse de la fibre composite (3) est comprise entre 20 et 1.000 dtex.

8. Bandage pneumatique selon la revendication 1, dans lequel la fibre composite (3) est agencée à un angle compris entre 50 et 130° par rapport à la direction circonférentielle du bandage pneumatique.

9. Bandage pneumatique selon la revendication 1, dans lequel la fibre conductrice contient au moins une d'une fibre à base de métal, d'une fibre à base de carbone et d'une fibre à base d'oxyde métallique.

10. Bandage pneumatique selon la revendication 1, dans lequel la fibre non conductrice contient au moins l'un de coton, de nylon, de polyester et de polypropylène

11. Bandage pneumatique selon la revendication 1, dans lequel l'allongement à la rupture Eb de la fibre composite (3) n'est pas inférieur à 5%, mesuré à 23°C selon un procédé de mesure « allongement à la rupture » défini dans la norme JIS K 6251:2010.

12. Bandage pneumatique selon la revendication 1, dans lequel la valeur de résistance de la fibre composite (3) n'est pas supérieure à 1,0 × 10⁷ Ω/cm.

13. Bandage pneumatique selon la revendication 1, dans lequel une partie de gomme conductrice (5) est disposée d'une partie de contact au sol de la bande de roulement vers une surface externe de la gomme de coussin (13C), dans la direction radiale du bandage pneumatique.
